# EUROPEAN PATENT SPECIFICATION

(11) **EP 2 854 199 B1**
(45) Date of publication and mention of the grant of the patent: **30.05.2018**
(21) Application number: 14185947.0
(22) Date of filing: 23.09.2014
(51) Int. Cl.: H01M 2/14, H01M 2/16, H01M 10/06

(54) **Battery separator having improved wettability and methods of use therefor**
Batterieseparator mit verbesserter Benetzbarkeit und Verfahren zur Verwendung davon
Séparateur de batterie à mouillabilité améliorée et ses procédés d'utilisation

(30) Priority: 26.09.2013 US 201314037755
(43) Date of publication of application: 01.04.2015
(73) Proprietor: Johns Manville, Denver, CO 80202 (US)
(72) Inventor: Guo, Zhihua, Centennial, CO Colorado 80112 (US); Asrar, Jawed, Englewood, CO Colorado 80111 (US); Nandi, Souvik, Highlands Ranch, CO Colorado 80130 (US); Dietz III, Albert G., Littleton, CO Colorado 80125 (US)
(74) Representative: Mai Dörr Besier European Patent Attorneys

(56) References cited:
- EP-A1- 0 954 885
- EP-A2- 1 444 742
- WO-A1-2009/102946
- WO-A1-2010/111491
- GB-A- 580 390
- US-A- 4 440 838
- US-A- 5 376 477
- US-A1- 2001 016 288
- US-A1- 2012 156 954

## Description

### BACKGROUND OF THE INVENTION

Lead-acid batteries are characterized as being inexpensive and highly reliable. Therefore, they are widely used as an electrical power source for starting motor vehicles or golf carts and other electric vehicles. Lead-acid batteries commonly include a separator that is positioned between the positive and negative electrodes of the battery. The environment with lead-acid batteries is rather harsh. Accordingly, the batteries' components, including the battery separator, must be able to withstand these environments. For example, battery separators are required to fuction in the battery's electrolyte solution, which commonly includes a relatively high water concentration. As such, conventional binder chemistries are typically hydrophobic. Hydrophobic binders are commonly used to ensure that the binder remains coupled with the fibers instead of dissolving and/or breaking down in the electrolyte's aqueous solution. Because of an increasing demand for lead-acid batteries, there is a constant need for lead-acid batteries having improved properties or characteristics.

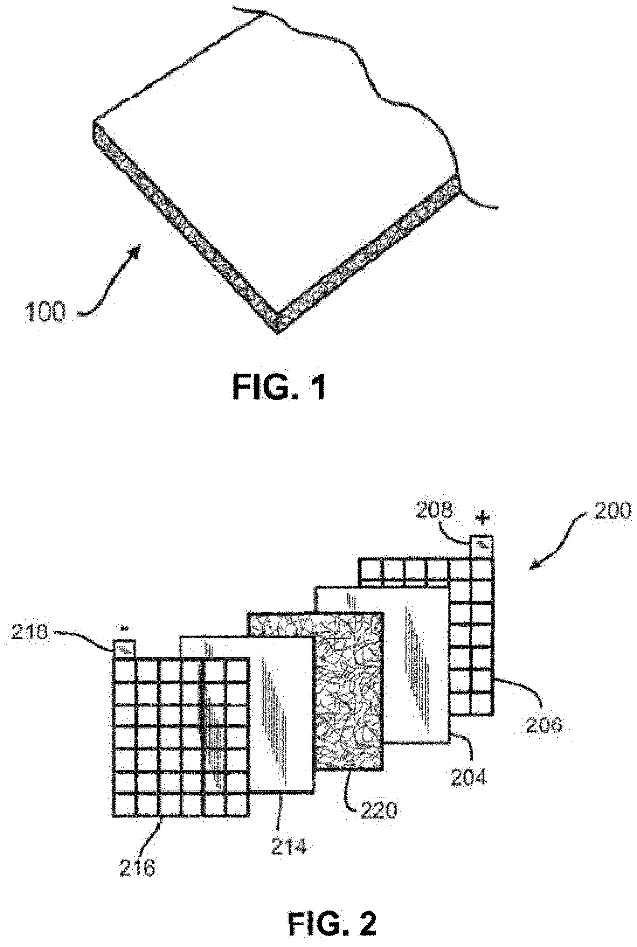

WO 2009/102946 deals with a separator for use in e.g. lead acid battery, which has secondary separator layer comprising a material which is less porous compared to that of primary separator layer. It also discloses ([0026], [0030], [0033]) a lead-acid battery (20) comprising: a positive plate or electrode (26); a negative plate or electrode (22); and a separator (24) disposed between the positive plate and the negative plate to electrically insulate the positive and negative plates (Figs.1-2, [0020], [0022], [0025]), the separator comprising: one nonwoven fiber mat (32), exhibiting a porosity of at least 16 microns ([0029]), the nonwoven fiber mat including: a plurality of glass fibers ([0029]) and an acid resistant binder (acrylic latex) that couples the plurality of glass fibers together to form the nonwoven fiber mat ([0030]). It also specifies ([0030]) that the mat (32) may include other materials such as acid resistant plastics, polycarbonates, natural rubber, polyolefins, various polymer compounds, and/or any other suitable material, one of those material could therefore be use to impregnate the plurality of glass fibers; and a second separator layer (31), which is less porous than the nonwoven fiber mat (32) ([0033]) and that is positioned adjacent the nonwoven fiber mat (Fig.2).

US 4 440 838 A discloses a separator (10) for a lead-acid battery comprising: a fibrous polymeric substrate (12), and a wetting composition (14) deposited at the surface of microfibers (16) (Fig.1, page 2, lines 3-7 and page 3 lines 28-31). The composition (14) is comprised of 73.5 % of a premixed emulsion and 26.5 % of a polyethylene imine curing agent. The premixed emulsion is comprised of 70 % of an uncured low molecular weight synthetic epoxy resin compound; 23.3 % of a high-molecular weight non-ionic surfactant wetting agent and 6.7 % of a dioctyl sodium sulfosuccinate emulsifier (page 3 line 56 - page 4 line 4). It also discloses that di- or poly-amines such as triethylenetetramine (TETA) and diethylamino-propylamine (DEAPA) have been used and give excellent cures instead of polyethylene imines. The wetting composition (14) modifies the meltblown web of polyolefin fibers by raising the critical surface tension of substrate (12) with respect to the surface tension of a solution of 30-40 % H₂SO₄ electrolyte, the separator is more hydrophilic and remains so as long as it is immersed in the electrolyte (page 3 lines 46-55).

### BRIEF SUMMARY OF THE INVENTION

The embodiments described herein provide lead-acid battery separators that exhibit increased acidophilicity and/or hydrophilicty. Such mats may be especially useful in flooded-type lead acid batteries in which the positive and negative electrodes are immersed in the battery's electrolyte solution. According to the invention a lead-acid battery is provided. The lead-acid battery includes a positive plate or electrode, a negative plate or electrode, and a separator that is disposed between the positive plate and the negative plate to electrically insulate the positive and negative plates. The separator includes a microporous polymer membrane and at least one nonwoven fiber mat that is positioned adjacent and coupled to a surface of the microporous polymer membrane to reinforce the microporous polymer membrane. The nonwoven fiber mat includes a plurality of glass fibers, an acid resistant binder that couples the plurality of glass fibers together to form the nonwoven fiber mat, and a polymer component that is impregnated within the plurality of glass fibers. The polymer component is capable of interacting with water or an electrolyte of the lead-acid battery to increase the wettability of the nonwoven fiber mat by enabling the polymer coated glass fibers to form a contact angle with a 33 wt.% sulfuric acid solution of 70°, or less.

According to the invention, the polymer component is a functional group that is coupled with a polymer backbone of the acid resistant binder. The functional group may include a hydroxyl group (OH), a carboxyl group (COOH), a carbonyl group (=O; aldehydes and ketones), an amino group (NH₂), a sulfhydryl group (-SH), a phosphate group (-PO₄), and the like. These functional groups are said to be hydrophilic because they interact with (or dissolve in) water by forming hydrogen bonds. These functional groups typically are polar or can ionize. In most cases, these functional groups are also acidophilic (to the electrolyte, i.e., ∼30 wt.% sulfuric acid used in lead acid batteries) since the majority of the electrolyte is still water. Due to this hydrophilicity/acidophilicity, the polymer can be wetted by water (or ∼30% wt.% sulfuric acid). Stated differently, hydrophilic, acidophilic, and wettable are considered inter-changeable throughout this application. Similarly, hydrophilicity, acidophilicity, and wettability are inter-changeable. In other embodiments, the polymer component may be a polymer solution or emulsion (e.g., starch solution) that is separate from the acid resistant binder and that is added to the nonwoven fiber mat. In some embodiments, the acid resistant binder and the polymer component may be a blend of a hydrophobic binder and a hydrophilic binder.

In some embodiments, the nonwoven fiber mat may be a first nonwoven fiber mat that is positioned adjacent a first side or surface of the microporous polymer membrane and the separator may additionally include a second nonwoven fiber mat that is positioned adjacent a second side or surface of the microporous polymer membrane opposite the first nonwoven fiber mat. The second nonwoven fiber mat may include a plurality of glass fibers and an acid resistant binder that couples the plurality of glass fibers together to form the second nonwoven fiber mat. In some embodiments, the second nonwoven fiber mat also includes a polymer component that is impregnated within the plurality of glass fibers and that increase the wettability of the second nonwoven fiber mat. In such embodiments, the wettability of the first nonwoven fiber mat may be greater than the wettability of the second nonwoven fiber mat.

According to the invention, a separator for a lead-acid battery is provided. The separator may include a microporous polymer membrane and at least one nonwoven fiber mat that is positioned adjacent the microporous polymer membrane so as to reinforce the microporous polymer membrane. The nonwoven fiber mat includes a plurality of glass fibers and an acid resistant binder that couples the plurality of glass fibers together to form the nonwoven fiber mat. The acid resistant binder has or includes one or more hydrophilic functional groups that are coupled with a backbone of the acid resistant binder. The one or more hydrophilic functional groups increases the wettability of the nonwoven fiber mat by enhancing the nonwoven fiber mat's ability to function or interact with water or an electrolyte of a lead-acid battery. According to the invention, the cured acid resistant binder may form a contact angle with a 33 wt.% sulfuric acid solution of 70° or less. In other embodiments, the cured acid resistant binder may form a contact angle with the 33 wt.% sulfuric acid solution of 50° or less. The acid resistant binder is applied to the glass and/or polymeric fibers so that upon curing, the acid resistant binder coats the glass and/or polymeric fibers.

According to the invention, the one or more hydrophilic functional groups may include a a hydroxyl group (OH), a carboxyl group (COOH), a carbonyl group (=O; aldehydes and ketones), an amino group (NH₂), a sulfhydryl group (-SH), a phosphate group (-PO₄), and the like. In some embodiments, the acid resistant binder may include a blend of a hydrophobic binder and a hydrophilic binder. In some embodiments, a second nonwoven fiber mat may be positioned adjacent a second side of the microporous polymer membrane so that the microporous polymer membrane is sandwiched between two nonwoven fiber mats. The second nonwoven fiber mat may include a plurality of glass fibers and an acid resistant binder that couples the plurality of glass fibers together to form the second nonwoven fiber mat. The acid resistant binder of the second nonwoven fiber mat may also include one or more hydrophilic functional groups that increase the wettability of the second nonwoven fiber mat by enhancing the second nonwoven fiber mat's ability to function or interact with water or an electrolyte of a lead-acid battery. In some embodiments, the wettability of one of the nonwoven fiber mats may be greater than the wettability of the other nonwoven fiber mat.

In some embodiments, the acid resistant binder may include at least two different functional groups that are coupled with the backbone of the acid resistant binder. In such embodiments, one of the functional groups may be a hydroxyl group.

According to the invention, a method of manufacturing a separator for a lead-acid battery is provided. The method includes providing a microporous polymer membrane and providing a plurality of entangled glass fibers. The method also includes applying an acid resistant binder to the plurality of entangled glass fibers to couple the plurality of glass fibers together to form a nonwoven fiber mat. The acid resistant binder includes one or more hydrophilic functional groups that are coupled to a backbone of the acid resistant binder. The one or more hydrophilic functional groups are functional with water or an electrolyte of a lead-acid battery such that the nonwoven fiber mat exhibits increased wettability. The method may further include coupling the nonwoven fiber mat with the microporous polymer membrane to reinforce the microporous polymer membrane.

In some embodiments, the method additionally includes grafting the hydrophilic functional groups onto the backbone of the acid resistant binder. In some embodiments, the method additionally includes neutralizing the one or more hydrophilic functional groups via an acid to increase the hydrophilicity of the acid resistant binder. The one or more hydrophilic functional groups may be neutralized prior to the acid resistant binder being applied to the plurality of entangled fibers, or the one or more hydrophilic functional groups may be neutralized subsequent to formation of the nonwoven fiber mat.

In some embodiments, the method may additionally include forming a second nonwoven fiber mat and coupling the second nonwoven fiber mat to the microporous polymer membrane so that the microporous polymer membrane is sandwiched between two nonwoven fiber mats. The second nonwoven fiber mat may include a plurality of entangled fibers and an acid resistant binder that couples the plurality of entangled fibers together to form the second nonwoven fiber mat. The separator may be positioned between electrodes of a lead-acid battery to electrically insulate the electrodes.

### BRIEF DESCRIPTION OF THE DRAWINGS

The present invention is described in conjunction with the appended figures:
FIG. 1 illustrates a battery separator for separating oppositely charged plates or electrodes of a lead-acid battery, according to an embodiment.
FIG. 2 illustrates a front exploded view of a lead-acid battery cell, according to an embodiment.
FIG. 3 is a method of manufacturing a battery separator for a lead-acid battery, according to an embodiment.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

The ensuing description provides exemplary embodiments only, and is not intended to limit the scope, applicability or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the scope of the invention as set forth in the appended claims.

The embodiments described herein provide lead-acid battery separators that exhibit increased acidophilicity and/or hydrophilicty. Such mats may be especially useful in flooded-type lead acid batteries in which the positive and negative electrodes are immersed in the battery's electrolyte solution. In such environments, the battery separators described herein exhibit increased wettablitiy when compared with conventional battery separators. The increased wettablitiy of the separators described herein facilitate the overall electrochemical reacton within battery cells. For example, the increased wettability may enhance the water/electorlyte availability at the separator/electrode interface and therefore protect the electrodes from exposure to air and/or enhance efficiency of electrochemical reaction, may reduce the internal electrical resistance of the cell, and/or extend the lifteime of the battery.

The increased acidophilicity and/or hydrophilicty of the battery separators is achieved by providing a fiber mat having hydrophilic properties. Conventional fiber mats used in battery separators are often made of glass fibers which are typically hydrophilic and/or polymeric fibers (e.g., polyolefin, polyester, etc.), which are inherently hydrophobic. The inherent hydrophobic property of polymeric fibers make the resulting mat relatively hydrophobic, especially if the mat is left untreated. Further, conventional binder chemistries are typically hydrophobic and are commonly used to ensure that the binder remains coupled with the fibers instead of dissolving and/or breaking down in the electrolyte's aqueous solution. As such, even when hydrophilic glass fibers are used, the resulting mat is typically hydrophobic because the hydrophobic binder covers the glass fibers, which renders the mat hydrophobic.

The acidophilicity and/or hydrophilicty of the fiber mats described herein may be increased in several ways. For example, in some embodiments a polymer component or emulsion, such as a starch solution can be added to the fiber mat. In some embodiments, the polymer component or emulsion may be added to the fiber mat separate from an acid resistant binder that is used to couple the glass and/or polymer fibers together. In another embodiment, the polymer component or emulsion may be a hydrophilic functional group of the acid resistant binder so that no additional solutions or materials need be added to the fiber mat. In another embodiment, the binder may include a blend of a hydrophilic binder and a hydrophobic binder. In some embodiments, the polymer component or emulsion can be soluble in water, such as a superabsorbitive polymer. Such components/emulsions may be able to absorb a significant amount of water, for example up to 100 times or more water by weight. In some embodiments, the binder includes less than about 30% by weight of the hydrophilic functional group to prevent the resulting glass mat from swelling due to the absorption of water. In other embodiments, the binder may include more than 30% by weight of the hydrophilic functional group. In such embodiments, the resulting mat may swell due to water absorption.

In a specific embodiment, the fiber mat's binder includes a hydrophilic functional group or groups. The hydrophilic functional groups may be added or grafted onto the binder's polymer backbone. This is usually achieved during the synthesis of the binder (polymer), i.e., copolymerization. For example, acrylic acid or maleic anhydride monomer can be added into the main monomer (i.e., methyl methacrylate) for the targetted polymer (i.e., polymethyl methacrylate or PMMA) to copolymerize to incorporate carboxyl groups on the polymer backbone. As another example, acrylic acid can be added to ethylene to copolymerize to polymer (ethylene-acrylic acid). By this method, the functional groups are incorporated in the polymer backbone. In addition, different techniques are available to graft desirable functional groups to a polymer and a grafted co-polymer is obtained. By this method, the functional groups are grafted to the polymer backbone but not a part of it. The hydrophilic functional groups may form a hydrogen bond with water so as to allow the resulting fiber mat to be more hydrophilic. Similar to the polymer component/emulsion, the hydrophilic functional groups can be soluble in water and may be able to absorb a significant amount of water (e.g., up to 100 times or more water by weight). In one embodiment, the hydrophilic functional groups include multiple acid groups, which provide the super-absorbtive capabilities.

In some embodiments, the hydrophilic functional groups may include a quaternary amine (i.e., N+R₁R₂R₃R₄, where R₁, R₂, R₃, and R₄ can be hydrogen, alkyl, alkenyl, cycloalkyl or cycloaklkenylene, etc), which allows the binder and fiber mat to be philic to water and sulfuric acid. In some embodiments, the possible counter-ion SO₄²⁻ for the quaternary amine may participate in the electrochemical reaction by providing additional SO₄²⁻ ions. Such binders and fiber mats may improve the reaction rate of the lead-acid battery thereby providing higher output current and capacity.

Having described several embodiments generally, additional aspects and features of the embodiments will be realized in relation to the figures, which are described hereinbelow. For convenience in describing the embodiments, the fibers of the various mats will be generally referred to as glass fibers. It should be realized, however, that other non-glass fibers may be used in the fiber mats in addition to, or in place of, the glass fibers. For example, various polymer fibers (e.g., polyolefin, polyester, and the like) may easily be substitued for, or used in addition to, the glass fibers without significantly affecting the resulting mat. In addition, as used herein, the term hydrophilic/acidophilic binder refers to a binder having a contact angle with 33 wt.% sulfuric acid (water for hydrophilic) medium of less than about 90°, preferably less than 70°, and most preferably less than 50°. In testing the contact angle of a binder, the binder may be spin-coated on a glass slide and then cured before being exposed to the above solution to measure the contact angle. In contrast, acidophobic as used herein refers to a binder having a contact angle with the above sulfuric acid concentration (hydrophobic for water) of greater than 70°, and more commonly greater than 90°.

### Embodiments

Referring now to FIG. 1, illustrated is an embodiment of a battery separator 100 for separating oppositely charged plates or electrodes of a lead-acid battery (hereinafter separator 100). Specifically, separator 100 is positionable between a positive electrode and a negative electrode to physically separate the two electrodes while enabling ionic transport and, thus, complete a circuit to allow an electric current to flow between a positive terminal and a negative terminal of the battery. Separator 100 includes a microporous membrane, which is typically a polymeric film having negligible conductance (e.g., polyethylene film). The microporous polymer membrane includes micro-sized voids that allow ionic transport (i.e., transport of ionic charge carriers) across separator 100. The microporous polymer membrane is typically thin and dimensionally unstable or weak.

Positioned adjacent at least one surface of the microporous polymer membrane is a nonwoven fiber mat. The nonwoven fiber mat is typically made of glass fibers, but may be made of other fibers as well, such as various polymer fibers (e.g., polyolefin, polyester, and the like). The nonwoven fiber mat is bonded with the surface of the polymeric film to reinforce the microporous polymer membrane and provide dimensional stability. The reinforcing nonwoven fiber mat allows the separator 100 to be positioned between electrodes of a lead-acid battery while preventing tearing, ripping, or other damage to the microporous polymer membrane.

The glass fibers of the nonwoven fiber mat may have a fiber diameter between about 0.1 µm and 30 µm. In one embodiment, the nonwoven fiber mat includes only or mainly larger diameter glass fibers or glass fibers having a fiber diameter between about 10 µm and 20 µm, and more commonly between about 10 µm and 15 µm. In another embodiment, the nonwoven fiber mat includes only or mainly smaller diameter glass fibers or glass fibers having a fiber diameter between about 0.1 µm and 5 µm. In yet another embodiment, the nonwoven fiber mat includes a blend of larger diameter and smaller diameter glass fibers. For example, the blended nonwoven fiber mat may include glass fibers having a fiber diameter between about 0.1 µm and 5 µm and glass fibers having a fiber diameter between about 10 µm and 20 µm.

As described briefly above, the glass fibers may be coupled or bonded together via an acid resistant binder to form the nonwoven fiber mat. The nonwoven fiber mat also includes a polymer component or emulsion that is impregnated within the plurality of glass fibers. The polymer component may interact with water or an electrolyte of the lead-acid battery such that the nonwoven fiber mat exhibits increased wettability. For example, the polymer component/emulsion may increase the wettability of the nonwoven fiber mat by enabling the polymer coated glass fibers to form a contact angle with a 33 wt.% sulfuric acid solution of 70° or less. In some embodiments, the polymer component may enable the polymer coated glass fibers to form a contact angle with the 33 wt.% sulfuric acid solution of 50° or less. The polymer component/emulsion may be added to the nonwoven fiber mat separate from and in addition to the acid resistant binder. More commonly, however, the polymer component/emulsion may be included with the acid resistant binder (e.g., grafted on the polymer backbone) so that only the acid resistant binder needs to be added to the glass fibers to enable the nonwoven fiber mat to exhibit increased wettability. According to the invention, the cured acid resistant binder - or binder coated glass fibers - forms a contact angle with a 33 wt.% sulfuric acid solution of 70° or less, and in some embodiments, may form a contact angle with the 33 wt.% sulfuric acid solution of 50° or less.

As described herein, the acid resistant binder is applied to a glass or other material slide and cured to form a solid binder surface. The 33 wt.% sulfuric acid solution is applied to the solid binder surface to enable measuring of the contact angle between the sulfuric acid solution and the binder. When the acid resistant binder is applied to the glass or polymer fibers of a mat, the binder typically coats the fibers. The binder is then cured so that the fibers include a solid coating of the binder. In such instances, the binder may enable the fibers, which may typically be hydrophobic, to form a contact angle of 70°, 50°, or less with the 33 wt.% sulfuric acid solution. As described herein, hydrophobic binders are commonly used in the formation of fiber mats. As such, the fibers of these conventional fiber mats typically have a hydrophobic binder coating after curing. Therefore, the binders and/or fibers of such conventional mats are unable to form contact angles of 70°, 50°, or less with the 33 wt.% sulfuric acid solution. In other words, the mat is not wettable by the sulfuric acid solution.

According to the invention, the acid resistant binder may include one or more hydrophilic functional groups that interact with water or an electrolyte of the lead-acid battery such that the nonwoven fiber mat exhibits increased wettability. The one or more hydrophilic functional groups include hydroxyl group (OH), a carboxyl group (COOH), a carbonyl group (=O; aldehydes and ketones), an amino group (NH₂), a sulfhydryl group (-SH), a phosphate group (-PO₄), and the like. In one embodiment, the acid resistant binder may include two or more different functional groups. In a specific embodiment, at least one of the functional groups is a hydroxyl group. The acid resistant binder may include up to about 50 wt.% of the one or more hydrophilic functional groups, although the acid resistant binder more commonly includes 0.01-10% wt.% of the one or more hydrophilic functional groups or 0.1-5% wt.% of the one or more hydrophilic functional groups.

The hydrophilic functional group may be added to or otherwise introduced in the polymer backbone of the acid resistant binder, such as by grafting the hydrophilic functional group onto the polymer backbone. In a specific embodiment, the acid resistant binder may be an acrylic copolymer with some self-crosslinking components. The above identified hydrophilic functional groups can be added or grafted onto the polymer backbone of the binder as described herein to make it more hydrophilic. After curing, such polyacrylic acid based binders typically have much lower contact angles in both water and sulfuric acid than conventional binders used for the battery separator mat. For example Table 1 below shows the contact angle of 4 test binders compared with a control binder after exposure to a 33 wt.% sulfuric acid solution. As shown, the 4 test binders exhibited contact angles of less than about 70° or less than about 50°, whereas the control binder exhibited a contact angle of greater than 70°. Incorporation of a -COOH group onto the polymer backbone of the binder may account for the reduction in contact angle of the test binders.

**Table 1**

| Binder | Rhoplex HA-16 from Dow Chemical | Test binder 1 | Test binder 2 | Test binder 3 | Test binder4 |
|---|---|---|---|---|---|
| Contact angle (in 33 wt. % sulfuric acid) | 77.2+/-1.0 | 45.7+/-1.5 | 50.8+/-1.4 | 57.3+/-0.3 | 58.2+/-3.5 |

Table 2 below shows the contact angle of a blended binder and the components of the blended binder after exposure to a 33 wt.% sulfuric acid solution. As shown, the blended binder included a combination of a first binder - i.e., Hycar 26-0688 - and a second binder - i.e., Test binder 5. Test binder 5 is based on the chemistry of SMAc -TEA (where SMAc represents Styrene Maleic Anhydride Amic Acid, TEA is triethanolamine). Additional details of the composition of Test binder 5 are provided in U.S. Patent Application No. 12/697,968, filed February 1, 2010, entitled "Formaldehyde-Free Protein-Containing Binder Compositions,". Test binder 5 is more hydrophilic than Hycar 26-0688 due to its available -COOH functional groups after curing. As shown in Table 2, the blended binder compositions worked synergistically to lower the contact angle to about 77°.

**Table 2**

| **Binder:** | **Liquid:** | **Avg. Contact Angle (°):** |
|---|---|---|
| Hvcar 26-0688/Test binder 5 | Sulfuric Acid (33 wt.%) | 77.7 |
| | Water | 66.2 |
| | | |
| Hvcar 26-0688 | Sulfuric Acid (33 wt.%) | 84.5 |
| | Water | 76.9 |
| | | |
| Test binder 5 | Sulfuric Acid (33 wt.%) | 80.7 |
| | Water | 65.7 |

When an amino group (NH2), or NR₁R₂ (where R₁ and R₂ can be hydrogen, alkyl, alkenyl, cycloalkyl or cycloaklkenylene, etc), is used as the hydrophilic functional group, its hydrophilicity can be further enhanced through neutralization by an acid, such as sulfuric acid so the polymer binder is cationic. Neutralization by the acid may occur before the binder is used to couple the fiber mat's glass fibers together, or after the nonwoven fiber mat is formed. Similarly, the inclusion of hydroxyl groups (OH) in addition to one of aforementioned functional groups can significantly enhance the hydrophilicity of the acid resistant binder and, therefore, the resulting nonwoven fiber mat.

In another embodiment, the binder used to couple the glass fibers may include a blend of a plurality of components. For example, the binder may include a compatible blend of a hydrophobic binder and a hydrophilic binder. The resulting binder and fiber mat may exhibit some hydrophobic and hydrophilic properties or capabilities. In some embodiments, the binder may include a blend of about 50% of a hydrophobic binder and about 50% of a hydrophilic binder. For example, in a specific embodiment, the binder blend may include Hycar® 26-0688, which is a hydrophobic binder, and a more hydrophilic component, Test binder 5 (or Test binders 1-4), which have carboxylic groups and are compatible with Hycar® 26-0688.. In another embodiment, the binder may include a blend of about 1-99% of a hydrophobic binder and about 1-99% of a hydrophilic binder, depending on how much hydrophilicity is needed.

In some embodiments, separator 100 may include a second nonwoven fiber mat that is positioned adjacent an opposite surface of the microporous polymer membrane so that the microporous polymer membrane is sandwiched between two nonwoven fiber mats. The second nonwoven fiber mat may also include a plurality of glass fibers and an acid resistant binder that couples the plurality of glass fibers together to form the second nonwoven fiber mat. In some embodiments, the binder of the second nonwoven fiber mat may not include hydrophilic functional groups and/or be impregnated with a polymer component or emulsion. Stated differently, the second nonwoven fiber mat may not have or exhibit increased wettability properties or characteristics like the other nonwoven fiber mat. In such embodiments, the microporous polymer membrane may be sandwiched between one nonwoven fiber mat that exhibits increased wettability and another nonwoven fiber mat that does not exhibit increased wettability. Such a separator 100 may be positioned within a battery cell so that the nonwoven fiber mat exhibiting increased wettability faces the positive electrode.

In another embodiment, the acid resistant binder of the second nonwoven fiber mat may also include one or more hydrophilic functional groups, and/or a polymer component or emulsion, that interact with water or an electrolyte of the lead-acid battery such that the second nonwoven fiber mat exhibits increased wettability. In such embodiments, the microporous polymer membrane may be sandwiched between two nonwoven fiber mats that both exhibit increased wettability as compared to conventional mats. In some embodiments, one of the nonwoven fiber mats may be configured to have or exhibit an increased amount of wettability as described herein compared with the other nonwoven fiber mat. The resulting separator 100 may be positioned within a battery cell so that the nonwoven fiber mat exhibiting the most wettability faces the positive electrode.

Referring now to FIG. 2, illustrated is front exploded view of a lead-acid battery cell 200. The lead-acid batter cell 200 may represent a cell used in a flooded lead-acid battery. Each cell 200 may provide an electromotive force (emf) of about 2.1 volts and a lead-acid battery may include 3 such cells 200 connected in series to provide an emf of about 6.3 volts or may include 6 such cells 200 connected in series to provide an emf of about 12.6 volts, and the like. Cell 200 includes a positive plate or electrode 204 and a negative plate or electrode 214 separated by battery separator 220. Positive electrode 204 includes a grid or conductor 206 of lead alloy material. A positive active material (not shown), such as lead dioxide, is typically coated or pasted on grid 206. Grid 206 is also electrically coupled with a positive terminal 208. In some embodiments, a reinforcement mat (not shown) may be coupled with grid 206 and the positive active material. The reinforcement mat may provide structural support for the grid 206 and positive active material.

Similarly, negative electrode 214 includes a grid or conductor 216 of lead alloy material that is coated or pasted with a negative active material (not shown), such as lead. Grid 216 is electrically coupled with a negative terminal 218. A reinforcement mat (not shown) may also be coupled with grid 216 and the negative active material. The reinforcement mat may provide structural support for the grid 216 and negative active material. In flooded type lead-acid batteries, positive electrode 204 and negative electrode 214 are immersed in an electrolyte (not shown) that may include a sulfuric acid and water solution.

As described herein, separator 220 includes a microporous polymer membrane (e.g., polyethylene porous membrane or film) and a nonwoven fiber mat that is positioned adjacent at least one surface of the microporous polymer membrane. The nonwoven fiber mat reinforces the microporous polymer membrane and/or provides dimensional stability. The nonwoven fiber mat includes a plurality of glass fibers and an acid resistant binder that couples the plurality of glass fibers together to form the nonwoven fiber mat. The nonwoven fiber mat may also include a polymer component that is impregnated within the plurality of glass fibers and that functions or interacts with water or the lead-acid battery's electrolyte such that the nonwoven fiber mat exhibits increased wettability. As described above, the polymer component/emulsion may increase the wettability of the nonwoven fiber mat by enabling the polymer/binder coated glass fibers to form a contact angle with a 33 wt.% sulfuric acid solution of 70°, 50°, or less.

As described above, the polymer component is a functional group that is coupled with a polymer backbone of the acid resistant binder. The functional group may include hydroxyl group (OH), a carboxyl group (COOH), a carbonyl group (=O; aldehydes and ketones), an amino group (NH₂), a sulfhydryl group (-SH), a phosphate group (-PO₄), and the like. The acid resistant binder may form a contact angle with a 33 wt.% sulfuric acid solution of 70° or less, and in some embodiments, may form a contact angle with the 33 wt.% sulfuric acid solution of 50° or less. In other embodiments, the polymer component may be a polymer solution or emulsion, such as a starch solution, that is added to the nonwoven fiber mat. The polymer solution or emulsion may be separate from the acid resistant binder. In yet other embodiments, the polymer component may include a blend of a hydrophobic binder and a hydrophilic binder as described above.

In some embodiments, separator 220 may also include a second nonwoven fiber mat that is positioned adjacent an opposite surface of the microporous polymer membrane so that the microporous polymer membrane is sandwiched between two nonwoven fiber mats. The second nonwoven fiber mat may include a plurality of glass fibers and an acid resistant binder that couples the plurality of glass fibers together to form the second nonwoven fiber mat. As described above, in some embodiments, the second nonwoven fiber mat may not include a polymer component so that the second nonwoven fiber mat does not exhibit increased wettability when compared with conventional separator fiber mats. In such embodiments, separator 220 includes one surface that exhibits increased wettability and one surface that does not exhibit increased wettability.

In other embodiments, the second nonwoven fiber mat may include a polymer component that is impregnated within the plurality of glass fibers and that increases the wettability of the second nonwoven fiber mat. As described herein, the polymer component may include one or more functional groups of the acid resistant binder, may include a solution or emulsion separate from the acid resistant binder, and/or include a blend of hydrophilic and hydrophobic binders. In some embodiments, the wettability of one of the nonwoven fiber mats may be greater than the wettability of the other nonwoven fiber mat. Separator 220 may be positioned within cell 200 so that the surface of separator 220 exhibiting the greatest wettability faces positive electrode 204. Stated differently, separator 220 may be positioned within cell 200 so that the nonwoven fiber mat exhibiting the greatest wettability is positioned adjacent positive electrode 204. Positioning the mat exhibiting the greatest wettability adjacent positive electrode 204 may enhance water availability at the PbO2/separator interface, thereby lessening the possibility of the cell drying out.

### Methods

The contact angle is measured in accordance with ASTM D7334.

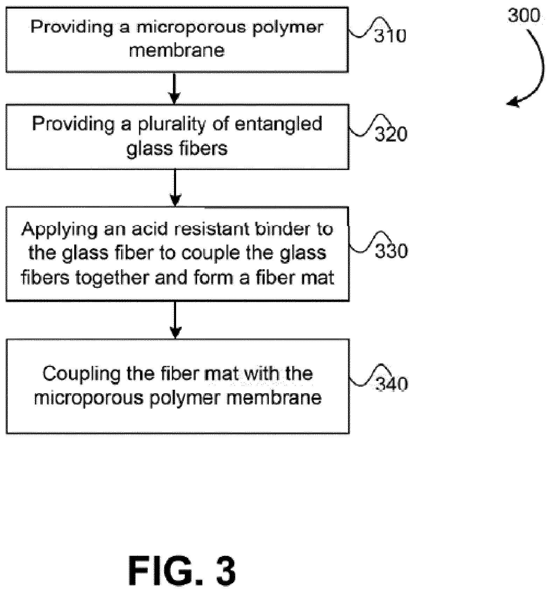

Referring now to FIG. 3, illustrated is an embodiment of a method 300 of manufacturing a battery separator that exhibits increased wettability properties or characteristics compared with conventional battery separators. The separators made from method 300 find usefulness in lead-acid battery and especially flooded-type lead-acid batteries. At block 310, a microporous polymer membrane is provided. At block 320, a plurality of entangled glass fibers are provided. At block 330, an acid resistant binder is applied to the plurality of entangled glass fibers to couple the plurality of glass fibers together so as to form a nonwoven fiber mat. As described herein, the acid resistant binder includes one or more hydrophilic functional groups, and/or a polymer component, that function or interact with water or an electrolyte of the lead-acid battery such that the nonwoven fiber mat exhibits increased wettability. In a specific embodiment, hydrophilic functional groups are coupled to a backbone of the acid resistant binder, such as by grafting the hydrophilic functional groups onto the binder's polymer backbone. At block 340, the nonwoven fiber mat is coupled with the microporous polymer membrane to reinforce and/or dimensionally stabilize the microporous polymer membrane.

In some embodiments, the method may further include neutralizing the one or more hydrophilic functional groups via an acid to increase the hydrophilicity of the acid resistant binder. In such embodiments, the one or more hydrophilic functional groups may be neutralized prior to the acid resistant binder being applied to the plurality of entangled fibers, or the one or more hydrophilic functional groups may be neutralized subsequent to formation of the nonwoven fiber mat.

In some embodiments, the method may further include forming a second nonwoven fiber mat and coupling the second nonwoven fiber mat to an opposite side of the microporous polymer membrane so that the microporous polymer membrane is sandwiched between two nonwoven fiber mats. The second nonwoven fiber mat may include a plurality of entangled fibers and an acid resistant binder that couples the plurality of entangled fibers together to form the second nonwoven fiber mat. As described herein, the second nonwoven fiber mat may or may not exhibit increased wettability properties and/or characteristics compared with conventional separator fiber mats. The method may additionally include positioning the separator between electrodes of a lead-acid battery to electrically insulate the electrodes. The separator may be positioned between the electrodes such that a surface exhibiting the greatest wettability is positioned adjacent, or otherwise faces, the positive electrode.

Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A lead-acid battery comprising:
(I) a positive plate or electrode (204);
(II) a negative plate or electrode (214); and
(III) a separator (220) disposed between the positive plate and the negative plate to electrically insulate the positive and negative plates, the separator comprising:
(III.i) a microporous polymer membrane; and
(III.ii) at least one nonwoven fiber mat that is positioned adjacent the microporous polymer membrane so as to reinforce the microporous polymer membrane, the nonwoven fiber mat including:
(III.ii.a) a plurality of glass fibers;
(III.ii.b) an acid resistant binder that couples the plurality of glass fibers together to form the nonwoven fiber mat; and
(III.ii.c) a polymer component impregnated within the plurality of glass fibers,
(III.ii.d) wherein the polymer component comprises a functional group that is coupled with a polymer backbone of the acid resistant binder, said functional group is selected from the group consisting of:
a hydroxyl group (OH);
a carboxyl group (COOH);
a carbonyl group (=O, aldehydes and ketones);
an amino group (NH₂);
a sulfhydryl group (-SH); and
a phosphate group (-PO₄)
and wherein the polymer component interacts with water or an electrolyte of the lead-acid battery to increase a wettability of the nonwoven fiber mat by enabling the polymer coated glass fibers to form a contact angle with a 33 wt.% sulfuric acid solution of 70° or less measured in accordance with ASTM D7334.

2. The lead-acid battery of claim 1, wherein the polymer component enables the polymer coated glass fibers to form a contact, angle with the 33 wt.% sulfuric acid solution of 50° or less.

3. The lead-acid battery of claim 1, wherein the polymer component comprises a polymer solution or emulsion that is added to the nonwoven fiber mat, the polymer solution or emulsion being separate from the acid resistant binder.

4. The lead-acid battery of claim 1, wherein the acid resistant binder and the polymer component comprise a blend of a 50 wt.% hydrophobic binder and a 50 wt.% hydrophilic binder.

5. The lead-acid battery of claim 1, wherein the nonwoven fiber mat comprises a first nonwoven fiber mat that is positioned adjacent a first side of the microporous polymer membrane, and wherein the separator further comprises:
(I) a second nonwoven fiber mat that is positioned adjacent a second side of the microporous polymer membrane opposite the first nonwoven fiber mat, the second nonwoven fiber mat including:
(I.i) a plurality of glass fibers; and
(I.ii) an acid resistant binder that couples the plurality of glass fibers together to form the second nonwoven fiber mat.

6. The lead-acid battery of claim 5, wherein the second nonwoven fiber mat also includes a polymer component impregnated within the plurality of glass fibers, wherein the polymer component increase the wettability of the second nonwoven fiber mat, preferably the wettability of the first nonwoven fiber mat is greater than the wettability of the second nonwoven fiber mat.

7. A separator (220) for a lead-acid battery comprising:
(I) a microporous polymer membrane; and
(II) at least one nonwoven fiber mat that is positioned adjacent the microporous polymer membrane so as to reinforce the microporous polymer membrane, the nonwoven fiber mat including:
(II.i) a plurality of glass fibers; and
(II.ii) an acid resistant binder that couples the plurality of glass fibers together to form the nonwoven fiber mat,
(II.ii.a) the acid resistant binder having one or more hydrophilic functional groups coupled with a backbone of the acid resistant binder, said hydrophilic functional group is selected from the group consisting of:
a hydroxyl group (OH);
a carboxyl group (COOH);
a carbonyl group (=O, aldehydes and ketones);
an amino group (NH₂);
a sulfhydryl group (-SH); and
a phosphate group (-PO₄)
(II.ii.b) to increase the wettability of the nonwoven fiber mat by enhancing an ability of the nonwoven fiber mat to function or interact with water or an electrolyte of the lead-acid battery to increase a wettability of the nonwoven fiber mat by enabling the acid resistant binder coupled glass fibers to form a contact angle with a 33 wt.% sulfuric acid solution of 70° or less measured in accordance with ASTM D7334.

8. The separator of claim 7, wherein the acid resistant binder forms a contact angle with a 33 wt.% sulfuric acid solution of 50° or less.

9. The separator of claim 7, wherein the acid resistant binder comprises a blend of a 50 wt.% hydrophobic binder and a 50 wt.% hydrophilic binder.

10. The separator of claim 7, wherein the nonwoven fiber mat comprises a first nonwoven fiber mat that is positioned adjacent a first side of the microporous polymer membrane, and wherein the separator further comprises:
(I) a second nonwoven fiber mat that is positioned adjacent a second side of the microporous polymer membrane opposite the first nonwoven fiber mat, the second nonwoven fiber mat including:
(I.i) a plurality of glass fibers; and
(I.ii) an acid resistant binder that couples the plurality of glass fibers together to form the second nonwoven fiber mat.

11. The separator of claim 10, wherein the acid resistant binder of the second nonwoven fiber mat also includes one or more hydrophilic functional groups that increase the wettability of the second nonwoven fiber mat by enhancing the nonwoven fiber mat's ability to function or interact with water or the electrolyte, preferably the wettability of the first nonwoven fiber mat is greater than the wettability of the second nonwoven fiber mat.

12. The separator of claim 11, wherein the acid resistant binder includes at least two different functional groups coupled to the backbone of the acid resistant binder.

13. The separator of claim 11, wherein one of the functional groups is a hydroxyl group.

14. A method of manufacturing a separator for a lead-acid battery, the method comprising:
(I) providing a microporous polymer membrane;
(II) providing a plurality of entangled glass fibers;
(III) applying an acid resistant binder to the plurality of entangled glass fibers to couple the plurality of glass fibers together to form a nonwoven fiber mat,
(III.i) the acid resistant binder including one or more hydrophilic functional groups that are coupled to a backbone of the acid resistant binder, said hydrophilic functional group is selected from the group consisting
of:
a hydroxyl group (OH);
a carboxyl group (COOH);
a carbonyl group (=O, aldehydes and ketones);
an amino group (NH₂);
a sulfhydryl group (-SH); and
a phosphate group (-PO₄)
the one or more hydrophilic functional groups being functional with water or an electrolyte of a lead-acid battery to increase a wettability of the nonwoven fiber mat by enabling the acid resistant binder coupled glass fibers to form a contact angle with a 33 wt.% sulfuric acid solution of 70° or less, measured in accordance with ASTM D7334, and
(IV) coupling the nonwoven fiber mat with the microporous polymer membrane so as to reinforce the microporous polymer membrane.

15. The method of claim 14, further comprising grafting the hydrophilic functional groups onto the backbone of the acid resistant binder.

16. The method of claim 14, further comprising neutralizing the one or more hydrophilic functional groups via an acid to increase the hydrophilicity of the acid resistant binder, preferably the one or more hydrophilic functional groups are neutralized prior to the acid resistant binder being applied to the plurality of entangled fibers or the one or more hydrophilic functional groups are neutralized subsequent to formation of the nonwoven fiber mat.

17. The method of claim 14, wherein the nonwoven fiber mat comprises a first nonwoven fiber mat that is positioned adjacent a first side of the microporous polymer membrane, and wherein the method further comprises:
(I) forming a second nonwoven fiber mat that includes:
(I.i) a plurality of entangled fibers; and
(I.ii) an acid resistant binder that couples the plurality of entangled fibers together to form the second nonwoven fiber mat; and
(II) coupling the second nonwoven fiber mat to a second side of the microporous polymer membrane opposite the first nonwoven fiber mat such that the microporous polymer membrane is sandwiched between two nonwoven fiber mats.

18. The method of claim 14, further comprising positioning the separator between electrodes of a lead-acid battery to electrically insulate the electrodes.

## Patentansprüche

1. Bleiakkumulator, umfassend:
(I) eine positive Platte oder Elektrode (204);
(II) eine negative Platte oder Elektrode (214); und
(III) einen Separator (220), der zwischen der positiven Platte und der negativen Platte angeordnet ist, um die positive und die negative Platte elektrisch zu isolieren, wobei der Separator umfasst:
(III.i) eine mikroporöse Polymermembran; und
(III.ii) wenigstens eine Vliesfasermatte, die benachbart zu der mikroporösen Polymermembran angeordnet ist, um die mikroporöse Polymermembran zu verstärken, wobei die Vliesfasermatte aufweist:
(III.ii.a) zahlreiche Glasfasern;
(III.ii.b) ein säurebeständiges Bindemittel, das die zahlreichen Glasfasern miteinander koppelt, um die Vliesfasermatte auszubilden; und
(III.ii.c) eine Polymerkomponente, die innerhalb der zahlreichen Glasfasern imprägniert ist,
(III.ii.d) wobei die Polymerkomponente eine funktionelle Gruppe umfasst, die mit einer Polymerhauptkette des säurebeständigen Bindemittels gekoppelt ist, wobei die funktionelle Gruppe ausgewählt ist aus der Gruppe bestehend aus:
einer Hydroxygruppe (OH);
einer Carboxygruppe (COOH);
einer Carbonylgruppe (=O, Aldehyde und Ketone);
einer Aminogruppe (NH₂);
einer Sulfhydrylgruppe (-SH); und
einer Phosphatgruppe (-PO₄)
und wobei die Polymerkomponente mit Wasser oder einem Elektrolyten des Bleiakkumulators wechselwirkt, um eine Benetzbarkeit der Vliesfasermatte zu erhöhen, indem die polymerbeschichteten Glasfasern in die Lage versetzt werden, mit einer 33 Gew.-%igen Schwefelsäurelösung einen Kontaktwinkel von 70° oder kleiner, gemessen gemäß ASTM D7334, auszubilden.

2. Bleiakkumulator nach Anspruch 1, wobei die Polymerkomponente die polymerbeschichteten Glasfasern in die Lage versetzt, mit der 33 Gew.-%igen Schwefelsäurelösung einen Kontaktwinkel von 50 ° oder kleiner auszubilden.

3. Bleiakkumulator nach Anspruch 1, wobei die Polymerkomponente eine Polymerlösung oder -emulsion umfasst, die der Vliesfasermatte zugegeben ist, wobei die Polymerlösung oder -emulsion separat von dem säurebeständigen Bindemittel vorliegt.

4. Bleiakkumulator nach Anspruch 1, wobei das säurebeständige Bindemittel und die Polymerkomponente eine Mischung aus 50 Gew.-% hydrophobem Bindemittel und 50 Gew.-% hydrophilem Bindemittel umfassen.

5. Bleiakkumulator nach Anspruch 1, wobei die Vliesfasermatte eine erste Vliesfasermatte umfasst, die benachbart zu einer ersten Seite der mikroporösen Polymermembran angeordnet ist, und wobei der Separator ferner umfasst:
(I) eine zweite Vliesfasermatte, die benachbart zu einer zweiten Seite der mikroporösen Polymermembran gegenüber der ersten Vliesfasermatte angeordnet ist, wobei die zweite Vliesfasermatte aufweist:
(I.i) zahlreiche Glasfasern; und
(I.ii) ein säurebeständiges Bindemittel, das die zahlreichen Glasfasern miteinander koppelt, um die zweite Vliesfasermatte auszubilden.

6. Bleiakkumulator nach Anspruch 5, wobei die zweite Vliesfasermatte auch eine Polymerkomponente aufweist, die innerhalb der zahlreichen Glasfasern imprägniert ist, wobei die Polymerkomponente die Benetzbarkeit der zweiten Vliesfasermatte erhöht, wobei vorzugsweise die Benetzbarkeit der ersten Vliesfasermatte größer ist als die Benetzbarkeit der zweiten Vliesfasermatte.

7. Separator (220) für einen Bleiakkumulator, umfassend:
(I) eine mikroporöse Polymermembran; und
(II) wenigstens eine Vliesfasermatte, die benachbart zu der mikroporösen Polymermembran angeordnet ist, um die mikroporöse Polymermembran zu verstärken, wobei die Vliesfasermatte aufweist:
(II.i) zahlreiche Glasfasern; und
(II.ii) ein säurebeständiges Bindemittel, das die zahlreichen Glasfasern miteinander koppelt, um die Vliesfasermatte auszubilden,
(II.ii.a) wobei das säurebeständige Bindemittel eine oder mehrere hydrophile funktionelle Gruppen umfasst, die mit einer Hauptkette des säurebeständigen Bindemittels gekoppelt sind, wobei die hydrophile funktionelle Gruppe ausgewählt ist aus der Gruppe bestehend aus:
einer Hydroxygruppe (OH);
einer Carboxygruppe (COOH);
einer Carbonylgruppe (=O, Aldehyde und Ketone);
einer Aminogruppe (NH₂);
einer Sulfhydrylgruppe (-SH); und
einer Phosphatgruppe (-PO₄),
(II.ii.b) um die Benetzbarkeit der Vliesfasermatte zu erhöhen, indem eine Fähigkeit der Vliesfasermatte, mit Wasser oder einem Elektrolyten des Bleiakkumulators zu funktionieren oder zu wechselwirken, verstärkt wird, um eine Benetzbarkeit der Vliesfasermatte zu erhöhen, indem die mit dem säurebeständigen Bindemittel gekoppelten Glasfasern in die Lage versetzt werden, mit einer 33 Gew.-%igen Schwefelsäurelösung einen Kontaktwinkel von 70° oder kleiner, gemessen gemäß ASTM D7334, auszubilden.

8. Separator nach Anspruch 7, wobei das säurebeständige Bindemittel mit einer 33 Gew.-%igen Schwefelsäurelösung einen Kontaktwinkel von 50° oder kleiner ausbildet.

9. Separator nach Anspruch 7, wobei das säurebeständige Bindemittel eine Mischung aus 50 Gew.-% hydrophobem Bindemittel und 50 Gew.-% hydrophilem Bindemittel umfasst.

10. Separator nach Anspruch 7, wobei die Vliesfasermatte eine erste Vliesfasermatte umfasst, die benachbart zu einer ersten Seite der mikroporösen Polymermembran angeordnet ist, und wobei der Separator ferner umfasst:
(I) eine zweite Vliesfasermatte, die benachbart zu einer zweiten Seite der mikroporösen Polymermembran gegenüber der ersten Vliesfasermatte angeordnet ist, wobei die zweite Vliesfasermatte aufweist:
(I.i) zahlreiche Glasfasern; und
(I.ii) ein säurebeständiges Bindemittel, das die zahlreichen Glasfasern miteinander koppelt, um die zweite Vliesfasermatte auszubilden.

11. Separator nach Anspruch 10, wobei das säurebeständige Bindemittel der zweiten Vliesfasermatte auch eine oder mehrere hydrophile funktionelle Gruppen aufweist, welche die Benetzbarkeit der zweiten Vliesfasermatte erhöhen, indem sie die Fähigkeit der Vliesfasermatte, mit Wasser oder dem Elektrolyten zu funktionieren oder zu wechselwirken, verstärken, wobei vorzugsweise die Benetzbarkeit der ersten Vliesfasermatte größer ist als die Benetzbarkeit der zweiten Vliesfasermatte.

12. Separator nach Anspruch 11, wobei das säurebeständige Bindemittel wenigstens zwei unterschiedliche funktionelle Gruppen aufweist, die an die Hauptkette des säurebeständigen Bindemittels gekoppelt sind.

13. Separator nach Anspruch 11, wobei eine der funktionellen Gruppen eine Hydroxygruppe ist.

14. Verfahren zum Herstellen eines Separators für einen Bleiakkumulator, wobei das Verfahren umfasst:
(I) Bereitstellen einer mikroporösen Polymermembran;
(II) Bereitstellen zahlreicher miteinander verschlungener Glasfasern;
(III) Aufbringen eines säurebeständigen Bindemittels auf die zahlreichen miteinander verschlungenen Glasfasern, um die zahlreichen Glasfasern miteinander zu koppeln, um eine Vliesfasermatte auszubilden,
(III.i) wobei das säurebeständige Bindemittel eine oder mehrere hydrophile funktionelle Gruppen aufweist, die an eine Hauptkette des säurebeständigen Bindemittels gekoppelt sind, wobei die hydrophile funktionelle Gruppe ausgewählt ist aus der Gruppe bestehend aus:
einer Hydroxygruppe (OH);
einer Carboxygruppe (COOH);
einer Carbonylgruppe (=O, Aldehyde und Ketone);
einer Aminogruppe (NH₂);
einer Sulfhydrylgruppe (-SH); und
einer Phosphatgruppe (-PO₄),
wobei die eine oder mehreren hydrophilen funktionellen Gruppen mit Wasser oder einem Elektrolyten eines Bleiakkumulators funktionsfähig sind, um eine Benetzbarkeit der Vliesfasermatte zu erhöhen, indem die mit dem säurebeständigen Bindemittel gekoppelten Glasfasern in die Lage versetzt werden, mit einer 33Gew.-%igen Schwefelsäurelösung einen Kontaktwinkel von 70° oder kleiner, gemessen gemäß ASTM D7334, auszubilden, und
(IV) Koppeln der Vliesfasermatte mit der mikroporösen Polymermembran, um die mikroporöse Polymermembran zu verstärken.

15. Verfahren nach Anspruch 14, das ferner ein Aufpropfen der hydrophilen funktionellen Gruppen auf die Hauptkette des säurebeständigen Bindemittels umfasst.

16. Verfahren nach Anspruch 14, das ferner ein Neutralisieren der einen oder mehreren hydrophilen funktionellen Gruppen über eine Säure umfasst, um die Hydrophilie des säurebeständigen Bindemittels zu erhöhen, wobei vorzugsweise die eine oder mehreren hydrophilen funktionellen Gruppen neutralisiert werden, bevor das säurebeständige Bindemittel auf die zahlreichen miteinander verschlungenen Fasern aufgebracht wird, oder die eine oder mehreren hydrophilen funktionellen Gruppen nach der Ausbildung der Vliesfasermatte neutralisiert werden.

17. Verfahren nach Anspruch 14, wobei die Vliesfasermatte eine erste Vliesfasermatte umfasst, die benachbart zu einer ersten Seite der mikroporösen Polymermembran angeordnet ist, und wobei das Verfahren ferner umfasst:
(I) Ausbilden einer zweiten Vliesfasermatte, die aufweist:
(I.i) zahlreiche miteinander verschlungene Fasern; und
(I.ii) ein säurebeständiges Bindemittel, das die zahlreichen miteinander verschlungenen Fasern miteinander koppelt, um die zweite Vliesfasermatte auszubilden; und
(II) Koppeln der zweiten Vliesfasermatte an eine zweite Seite der mikroporösen Polymermembran gegenüber der ersten Vliesfasermatte derart, dass die mikroporöse Polymermembran zwischen zwei Vliesfasermatten angeordnet ist.

18. Verfahren nach Anspruch 14, das ferner ein Anordnen des Separators zwischen Elektroden eines Bleiakkumulators umfasst, um die Elektroden elektrisch zu isolieren.

## Revendications

1. Batterie au plomb, comprenant:
(I) une plaque positive ou électrode (204);
(II) une plaque négative ou électrode (214); et
(III) un séparateur (220) disposé entre la plaque positive et la plaque négative pour isoler électriquement les plaques positive et négative, le séparateur comprenant:
(III.i) une membrane de polymère microporeuse ; et
(III.ii) au moins un mat de fibres non tissées qui est positionné adjacent à la membrane de polymère microporeuse pour renforcer la membrane de polymère microporeuse, le mat de fibres non tissées incluant:
(III.ii.a) une pluralité de fibres de verre;
(III.ii.b) un liant résistant à l'acide qui couple la pluralité de fibres de verre ensemble pour former le mat de fibres non tissées; et
(III.ii.c) un composant de polymère imprégné avec lapluralité de fibres de verre,
(III.ii.d) où le composant de polymère comprend un groupe fonctionnel qui est couplé avec une chaîne de polymère du liant résistant à l'acide, ledit groupe fonctionnel est choisi du groupe formé d':
un groupe hydroxyle (OH) ;
un groupe carboxyle (COOH) ;
un groupe carbonyle (=O, aldéhydes et cétones);
un groupe amino (NH₂),
un groupe sulfhydryle (-SH); et
un groupe phosphate (-PO₄)
et où le composant de polymère interagit avec de l'eau ou un électrolyte de la batterie au plomb pour augmenter la mouillabilité du mat de fibres non tissées en permettant aux fibres de verre revêtues en polymère former un angle de contact avec une solution d'acide sulfurique de 33 % en poids à 70° ou moins mesuré selon ASTM D7334.

2. Batterie au plomb selon la revendication 1, où le composant de polymère permet aux fibres de verre revêtues en polymère former un angle de contact avec la solution d'acide sulfurique de 33 % en poids à 50° ou moins.

3. Batterie au plomb selon la revendication 1, où le composant de polymère comprend une solution de polymère ou émulsion qui est ajoutée au mat de fibres non-tissées, la solution de polymère ou émulsion étant distincte du liant résistant à l'acide.

4. Batterie au plomb selon la revendication 1, où le liant résistant à l'acide et le composant de polymère comprennent un mélange de 50% en poids de liant hydrophobe et 50% en poids de liant hydrophile.

5. Batterie au plomb selon la revendication 1, où le mat de fibres non tissées comprend un premier mat de fibres non tissées qui est positionné adjacent au premier côté de la membrane de polymère microporeuse, et où le séparateur comprend de plus:
(I) un second mat de fibres non tissées qui est positionné adjacent au second côté de la membrane de polymère microporeuse opposé au premier mat, le second mat de fibres non tissées incluant :
(I.i) une pluralité de fibres de verre; et
(I.ii) un liant résistant à l'acide qui couple la pluralité de fibres de verre ensemble pour former le second mat de fibres non tissées.

6. Batterie au plomb selon la revendication 5, où le second mat de fibres non tissées comprend aussi un composant de polymère imprégné avec la pluralité de fibres de verre, où le composant de polymère augmente la mouillabilité du second mat de fibres non tissées, préférablement la mouillabilité du premier mat de fibres non tissées est plus grande que la mouillabilité du second mat de fibres non tissées.

7. Séparateur (220) pour une batterie au plomb comprenant :
(I) une membrane de polymère microporeuse; et
(II) au moins un mat de fibres non tissées qui est positionné adjacent à la membrane de polymère microporeuse pour renforcer la
membrane de polymère microporeuse, le mat de fibres non tissées incluant:
(II.i) une pluralité de fibres de verre; et
(II.ii) un liant résistant à l'acide qui couple la pluralité de fibres de verre ensemble pour former le mat de fibres non tissées;
(II.ii.a) le liant résistant à l'acide ayant un ou plusieurs groupes fonctionnels hydrophiles couplé avec une chaîne du liant résistant à l'acide, ledit groupe fonctionnel hydrophile est choisi du groupe formé d':
un groupe hydroxyle (OH);
un groupe carboxyle (COOH);
un groupe carbonyle (=O, aldéhydes et cétones);
un groupe amino (NH₂),
un groupe sulfhydryle (-SH); et
un groupe phosphate (-PO₄)
(II.ii.b) pour augmenter la mouillabilité du mat de fibres non tissées en améliorant une capacité du mat de fibres non tissées pour fonctionner ou interagir avec de l'eau ou un électrolyte de la batterie au plomb pour augmenter la mouillabilité du mat de fibres non tissées en permettant au liant résistant à l'acide couplé aux fibres de verre pour former un angle de contact avec une solution d'acide sulfurique de 33 % en poids à 70° ou moins, mesuré selon ASTM D7334.

8. Séparateur selon la revendication 7, où le liant résistant à l'acide forme un angle de contact avec une solution d'acide sulfurique de 33 % en poids à 50° ou moins.

9. Séparateur selon la revendication 7, où le liant résistant à l'acide comprend un mélange de 50% en poids liant hydrophobe et 50% en poids liant hydrophile.

10. Séparateur selon la revendication 7, où le mat de fibres non tissées comprend un premier mat de fibres non tissées qui est positionné adjacent au premier côté de la membrane de polymère microporeuse, et où le séparateur comprend de plus:
(I) un second mat de fibres non tissées qui est positionné adjacent au second côté de la membrane de polymère microporeuse opposé au premier mat de fibres non tissées, le second mat de fibres non tissées incluant:
(I.i) une pluralité de fibres de verre; et
(I.ii) un liant résistant à l'acide qui couple la pluralité de fibres de verre ensemble pour former le second mat de fibres non tissées.

11. Séparateur selon la revendication 10, où le liant résistant à l'acide du second mat de fibres non tissées comprend aussi un ou plusieurs groupes fonctionnels hydrophiles qui augmentent la mouillabilité du second mat de fibres non tissées en améliorant la capacité du mat de fibres non tissées de fonctionner ou interagir avec de l'eau ou de l'électrolyte, préférablement la mouillabilité du premier mat de fibres non tissées est plus grande que la mouillabilité du second mat de fibres non tissées.

12. Séparateur selon la revendication 11, où le liant résistant à l'acide comprend au moins deux groupes fonctionnels différents couplés à la chaîne du liant résistant à l'acide.

13. Séparateur selon la revendication 11, où l'un des groupes fonctionnels est un groupe hydroxyle.

14. Procédé de production un séparateur pour une batterie au plomb, le procédé comprenant:
(I) pourvoir une membrane de polymère microporeuse;
(II) pourvoir une pluralité de fibres de verre enchevêtrées;
(IV) appliquer un liant résistant à l'acide à la pluralité de fibres de verre enchevêtrées pour coupler la pluralité de fibres de verre ensemble pour former un mat de fibres non tissées,
(III.i) le liant résistant à l'acide incluant un ou plusieurs groupes fonctionnels hydrophiles qui sont couplés à une chaîne du liant résistant à l'acide, ledit groupe fonctionnel hydrophile est choisi du groupe formé d':
un groupe hydroxyle (OH);
un groupe carboxyle (COOH);
un groupe carbonyle (=O, aldéhydes et cétones);
un groupe amino (NH₂),
un groupe sulfhydryle (-SH); et
un groupe phosphate (-PO₄)
l'un ou plusieurs groupes hydrophiles étant fonctionnels avec de l'eau ou un électrolyte d'une batterie au plomb pour augmenter la mouillabilité du mat de fibres non tissées en permettant au liant résistant à l'acide couplé aux fibres de
verre former un angle de contact avec une solution d'acide sulfurique de 33 % en poids à 70° ou moins, mesuré selon l'ASTM D7334, et
(V) coupler le mat de fibres non tissées avec la membrane de polymère microporeuse pour renforcer la membrane de polymère microporeuse.

15. Procédé selon la revendication 14, comprenant de plus greffer les groupes fonctionnels hydrophiles sur la chaîne du liant résistant à l'acide.

16. Procédé selon la revendication 14, comprenant de plus neutraliser un ou plusieurs groupes fonctionnels hydrophiles par un acide pour augmenter l'hydrophilie du liant résistant à l'acide, préférablement un ou plusieurs groupes fonctionnels hydrophiles sont neutralisés avant d'appliquer le liant résistant à l'acide à la pluralité de fibres enchevêtrées ou un ou plusieurs groupes fonctionnels hydrophiles sont neutralisés après la formation du mat de fibres non tissées.

17. Procédé selon la revendication 14, où le mat de fibres non tissées comprend un premier mat de fibres non tissées qui est positionné adjacent au premier côté de la membrane de polymère microporeuse, et où le procédé comprend de plus:
(I) former un second mat de fibres non tissées qui comprend:
(I.i) une pluralité de fibres enchevêtrées; et
(I.ii) un liant résistant à l'acide qui couple la pluralité de fibres enchevêtrées ensemble pour former le second mat de fibres non tissées, et
(II) coupler le second mat de fibres non tissées à un second côté de la membrane de polymère microporeuse opposé au premier mat de fibres non tissées de sorte que la membrane de polymère microporeuse soit prise en sandwich entre les deux mats de fibres non tissées.

18. Procédé selon la revendication 14, comprenant de plus positionner le séparateur entre les électrodes d'une batterie au plomb pour isoler électriquement les électrodes.
